# EUROPÄISCHE PATENTSCHRIFT

(11) **EP 1 472 045 B1**
(45) Veröffentlichungstag und Bekanntmachung des Hinweises auf die Patenterteilung: **14.09.2005**
(21) Anmeldenummer: 02799045.6
(22) Anmeldetag: 27.11.2002
(51) Int. Cl.: B23Q 1/76, B23B 5/18, B23Q 1/62

(54) **WERKZEUGMASCHINE ZUM BEARBEITEN DES PASSLAGERS VON KURBELWELLEN**
MACHINE TOOL FOR MACHINING THE THRUST BEARING OF CRANKSHAFTS
MACHINE-OUTIL POUR L'USINAGE DE PORTEES AJUSTEES DE VILEBREQUINS

(30) Priorität: 10.01.2002 DE 10200774
(43) Veröffentlichungstag der Anmeldung: 03.11.2004
(73) Patentinhaber: Hegenscheidt-MFD GmbH & Co. KG, 41812 Erkelenz (DE)
(72) Erfinder: RISTERS, Frank, 41812 Erkelenz (DE)
(74) Vertreter: Simons, Johannes
(86) Internationale Anmeldenummer: PCT/EP2002/013348
(87) Internationale Veröffentlichungsnummer: WO 2003/057400

(56) Entgegenhaltungen:
- EP-A- 0 743 139
- CH-A- 230 535
- DE-A- 19 749 939
- DE-A- 19 911 156
- DE-A- 19 952 361
- US-A- 5 525 017
- US-A- 5 997 452
- "Universelle Feindreh & Glattwalzmaschine für die Kurbenwellen-Fertigung; Modellreihe 7794" FIRMENPROSPEKT DER HEGENSCHEIDT-MFD GMBH & CO KG, [Online] Februar 2001 (2001-02), XP002239218 Gefunden im Internet: <URL:http://www.hegenscheidt-mfd.de/de/mas chinen/pdf/7794_de.pdf> [gefunden am 2003-04-24] in der Anmeldung erwähnt
- PATENT ABSTRACTS OF JAPAN vol. 007, no. 261 (M-257), 19. November 1983 (1983-11-19) & JP 58 143903 A (KOMATSU SEISAKUSHO KK), 26. August 1983 (1983-08-26)
- PATENT ABSTRACTS OF JAPAN vol. 1995, no. 10, 30. November 1995 (1995-11-30) & JP 07 171763 A (NIPPEI TOYAMA CORP), 11. Juli 1995 (1995-07-11)
- DATABASE WPI Week 8434 Derwent Publications Ltd., London, GB; AN 1984-211539 XP002239219 & SU 1 061 969 A (KIEV POLY), 23. Dezember 1983 (1983-12-23)
- DATABASE WPI Week 8306 Derwent Publications Ltd., London, GB; AN 1983-B9692K XP002239220 & SU 916 224 A (KIEV POLY), 30. März 1982 (1982-03-30)

## Beschreibung

Die Erfindung betrifft eine Werkzeugmaschine zum Bearbeiten des Passlagers und gegebenenfalls weiterer Teile von Kurbelwellen. Eine Kurbelwelle im Sinne der vorliegenden Erfindung ist eine mehrfach gekröpfte Welle, die im Motorblock eines Verbrennungsmotors drehbar gelagert ist, wo sie die hin- und hergehende Bewegung des Kolbens über die Pleuelstange in eine Drehbewegung umformt. Bei den in Betracht kommenden Verbrennungsmotoren handelt es sich entweder um Otto- oder um Dieselmotoren zum Antrieb von Kraftfahrzeugen. Die Kurbelwelle besteht aus mehreren Hauptlagerzapfen, mit denen sie im Motorblock gelagert ist und um die sie sich dreht, den um den Kurbelradius versetzten Kurbelzapfen und den diese Teile verbindenden Kurbelwangen.

Am vorderen Ende der Kurbelwelle befindet sich der Wellenzapfen und am hinteren Ende der Flansch, auf welchen im Verbrennungsmotor die Kupplung folgt. Ungefähr auf der halben axialen Länge der Kurbelwelle befindet sich das Passlager, welches dazu vorgesehen ist, die von der Kupplung auf die Kurbelwelle übertragenen axialen Kräfte aufzunehmen und in den Motorblock einzuleiten.

Für die Bearbeitung des Passlagers und gegebenenfalls des Wellenzapfens und des Flansches sind spezielle Werkzeugmaschinen vorgesehen.

Aus einem Firmenprospekt der Anmelderin ist beispielsweise eine "Universale Feindreh- und Glattwalzmaschine zur Bearbeitung von Kurbelwellen gemäß dem Oberbegriff des Anspruchs 1 bekannt, welche zur Bearbeitung des Passlagers einer Serie von Kurbelwellen und deren Flanschstirnflächen dient. Bei der unter der Typenbezeichnung 7794 bekannten Maschine ist für die Feinbearbeitung des Passlagers ein Passlagersupport vorgesehen, der mit festem Werkzeug oder mit einem Werkzeug mit verstellbaren Schneiden zur spanenden Bearbeitung des Passlagers dient. Die Schneidwerkzeuge sind auf einem Schlitten angeordnet und innerhalb der Maschine in radialer und axialer Richtung verfahrbar. Die axiale Verfahrbarkeit dient in der Hauptsache dazu, die Lage des Passlagers in Längsrichtung zu einer Bezugsfläche zu kompensieren.

Auf dem Schlitten für die Schneidwerkzeuge sind auch eine Walzeinheit und eine Messeinrichtung angeordnet, die jeweils nur in radialer Richtung zugestellt werden können, d.h. wenn die Schneidwerkzeuge außer Eingriff sind. Für die Feinbearbeitung am Flansch oder Wellenzapfen der Kurbelwelle ist bei der bekannten Maschine ein weiterer Zusatzsupport vorgesehen, auf dem ein Werkzeugrevolver angeordnet ist, der sowohl in radialer als auch in axialer Richtung verfahrbar ist. Auf den Stationen des Werkzeugrevolvers sind Werkzeuge für die Drehbearbeitung und ein Messfühler angeordnet.

In der bekannten Maschine wird die Kurbelwelle in Spitzen aufgenommen und über einen Mitnehmer, der am Flansch angreift, in Umdrehung versetzt. Dabei dreht sich die Kurbelwelle um ihre Hauptachse, während sie an ihren beiden Enden jeweils in Spitzen gelagert ist.

Die bekannte Maschine hat mehrere Nachteile. Durch die Vielzahl von Schlittenachsen können an der Kurbelwelle räumliche Formfehler entstehen. Die Anordnung des Passlagersupports lässt beim Messen nur geringe Zustellbewegungen zu, weil die Schneid- und Walzwerkzeuge in den Weg des Messwerkzeugs teilweise hinein ragen. Dieses wiederum verkompliziert die Steuerungen, welche für die Bewegungen der Messtaster erforderlich sind. Schließlich sind die erzielbaren Schnittgeschwindigkeiten an den Schneidwerkzeugen gering, weil die Maschine konstruktionsbedingt über die Aufnahme der Kurbelwelle zwischen Spitzen und dem Mitnehmer Unwuchten zulässt, bzw. zu Unwuchten führen kann.

Der Erfindung liegt die Aufgabe zugrunde, eine Werkzeugmaschine vorzuschlagen, welche die Nachteile der bekannten Werkzeugmaschine nicht aufweist. Insbesondere soll die Anzahl der erforderlichen Bearbeitungsstationen, entsprechend der Anzahl der erforderlichen Werkzeuge, auf einer einzigen Bearbeitungsstation zusammengefasst werden. Schließlich soll die Werkzeugmaschine einfach und übersichtlich in ihrem Aufbau, zuverlässig in ihrer Funktion und wirtschaftlich sein.

Erfindungsgemäß wird eine verbesserte Werkzeugmaschine gemäß Anspruch 1 vorgeschlagen.

Durch das Abstützen der Kurbelwelle auf ungefähr der halben axialen Länge in Höhe des Passlagers kann das Passlager mit sehr großer Genauigkeit spanend bearbeitet und festgewalzt werden. Zum genauen Abstützen kann die Lünette senkrecht zur Längsrichtung der Maschine verfahren werden. Durch den Antrieb der Kurbelwelle in einem Backenfutter in der Nähe des Flansches und die Abstützung auf einem Reitstock an dem, dem Flansch gegenüberliegenden Ende der Kurbelwelle, wo der Wellenzapfen sitzt, wird eine schwingungsfreie und drehsichere Mitnahme der Kurbelwelle erzielt. Insbesondere ist vorgesehen, dass sowohl die Lünette als auch der Reitstock über geringe Wege in axialer Richtung, d.h. in Längsrichtung der Bearbeitungsmaschine verfahrbar sind.

Der Längsbalken, der sich über wesentliche Längenabschnitte des Maschinenbetts erstreckt, trägt weiter zur Versteifung des Maschinenbetts bei. Mit Hilfe des auf dem Längsbalken angeordneten Kreuzschlittens, können die im Werkzeugrevolver befestigten Bearbeitungswerkzeuge mit beliebiger Genauigkeit in axialer und radialer Richtung in Bezug auf das Passlager zugestellt werden.

Einige der Werkzeuge benötigen auch einen eigenen Antrieb, beispielsweise die Anstellung der Festwalzrollen zum Festwalzen des Passlagers. Nachdem die Festwalzrollen in Arbeitsstellung gebracht sind, werden sie durch eine geringe Winkelbewegung um ihre gemeinsame Längsachse verstellt, so dass sie durch Abrollen auf den Planflächen des Passlagers dort die erforderliche Verfestigung bewirken können. Während des Festwalzvorgangs schwimmt die Kreuzschlittenachse in Längsrichtung der Maschine. Aber auch für das Schneidwerkzeug ist ein eigener Antrieb vorgesehen, der dazu dienen soll, bei feststehenden Schneiden den Schneidenverschleiß auszugleichen. Bei drehenden Schneiden, wie beispielsweise bei Fräsern, wird der dafür erforderliche Drehantrieb über den Revolverkopf in das Fräswerkzeug eingeleitet.

Neben den beschriebenen Werkzeugen zur Bearbeitung des Passlagers sind auf dem Revolverkopf, wie an sich bekannt, auch noch weitere Werkzeuge vorgesehen, die beispielsweise dazu dienen, die Planflächen des Flansches, Planflächen der Kurbelwangen sowie den Wellenzapfen zu bearbeiten und fest und glatt zu walzen. Mit diesen zusätzlichen Werkzeugen wird der Revolverkopf je nach vorliegendem Bearbeitungsprogramm bestückt.

Nachfolgend wird die Maschine an einem Ausführungsbeispiel näher beschrieben.

Es zeigen in jeweils stark vereinfachter, nicht maßstäblicher Darstellung, die
- Fig. 1, eine Maschine in der Seitenansicht,

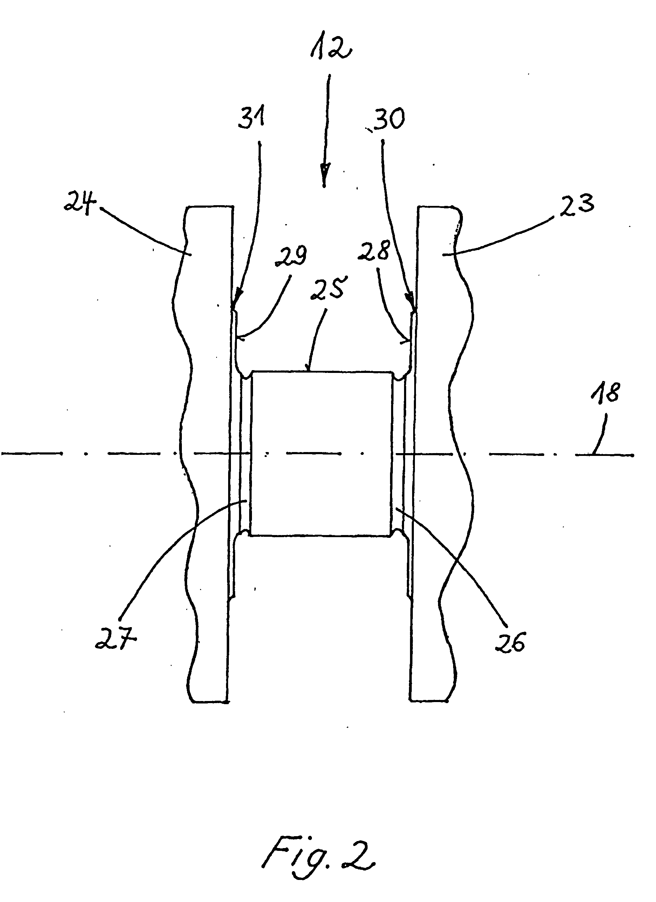

- Fig. 2, das Passlager einer Kurbelwelle entsprechend einem vergrößerten Ausschnitt A der Fig. 1.

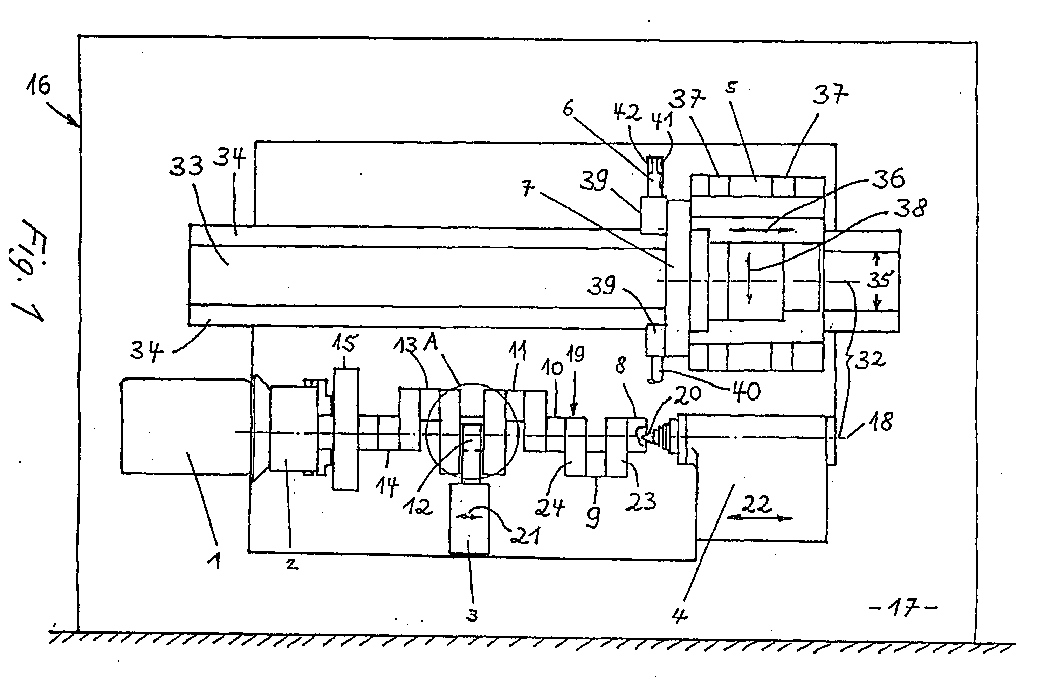

Die Werkzeugmaschine 16 hat ein rahmenförmiges Maschinenbett 17 von angenähert rechteckigen Querschnitt, wie man das in der Fig. 1 deutlich sehen kann. In der axialen Längsrichtung 18 der Werkzeugmaschine 16 und in der Flucht miteinander sind nacheinander angeordnet ein Servomotor 1, ein Spannfutter 2, eine Lünette 3 und ein Reitstock 4. Zwischen dem Spannfutter 2 und dem Reitstock 4 ist eine Kurbelwelle 19 eingespannt.

Mit ihrem Wellenzapfen 8 wird die Kurbelwelle 19 in der Reitstockspitze 20 des Reitstocks 4 aufgenommen. Beispielsweise in axialer Richtung zum Spannfutter 2 hin folgen auf den Wellenzapfen 8 das Hublager 9, das Hauptlager 10, das Hublager 11, das Haupt- und Passlager 12, das Hublager 13, das Hauptlager 14 und der Flansch 15. Der Flansch 15 ist im Spannfutter 2 gespannt, welches vom Servomotor 1 während der Bearbeitung der Kurbelwelle 19 in Umdrehung versetzt wird. Dabei dreht sich die Kurbelwelle 19 um ihre Längsachse, welche in der axialen Längsrichtung 18 der Werkzeugmaschine 16 liegt. Auf etwa ihrer halben axialen Länge wird die Kurbelwelle 19 auf der Höhe des Haupt- und Passlagers 12 von der Lünette 3 abgestützt. Sowohl die Lünette 3 als auch der Reitstock 4 können um geringe Wege 21 bzw. 22 in der axialen Längsrichtung 18 verfahren werden. Darüber hinaus kann die Lünette 3 auch noch um einen geringen Weg senkrecht zur Längsrichtung 18 zugestellt werden.

Die Lagerstellen 8, 9, 10, 11, 12, 13 und 14 der Kurbelwelle 19 werden zu beiden Seiten jeweils durch die Kurbelwangen 23 bzw. 24 begrenzt. Zwischen den Kurbelwangen 23 und 24 befindet sich das jeweilige Haupt-10, 12 und 14 bzw. das Pleuellager 9, 11 und 13. Mit Ausnahme des Passlagers 12 sind die übrigen Lager 8, 9, 10, 11, 13 und 14 annähernd gleichartig ausgebildet. Jedes der Lager hat einen Lagersitz 25, der in axialer Richtung 18 zu beiden Seiten von Einstichen 26 bzw. 27 begrenzt wird. Beim Hauptlager 12 schließen sich an die Einstiche 26 bzw. 27 zu den Wangen 23 bzw. 24 jeweils die ringförmigen Planflächen 28 bzw. 29 an, welche das eigentliche Passlager 12 bilden. Über die Ölbunde 30 und 31 gehen die Planflächen 28 und 29 sodann in die Kurbelwangen 23 bzw. 24 über.

In der axialen Längsrichtung 18 und in einem Abstand 32 parallel dazu erstreckt sich ein Längsbalken 33 über das Maschinenbett 17 der Werkzeugmaschine 16. Der Längsbalken 33 hat die beiden Längsführungen 34, die parallel zueinander und wiederum in einem gegenseitigen Abstand 35 voneinander verlaufen.

Der Längsbalken 33 dient zur Führung des Kreuzschlittens 5 in Richtung der Pfeile 36 annähernd über die gesamte axiale Länge des Längsbalkens 33. Der Kreuzschlitten 5 hat seinerseits Querführungen 37, über welche der Werkzeugrevolver 7 in der radialen Richtung 38 bewegt werden kann.

Der Werkzeugrevolver 7 weist eine Mehrzahl von Bearbeitungsstationen 39 auf, welche mit Bearbeitungswerkzeugen 6 bzw. 40 bestückt werden können.

Beim Bearbeitungswerkzeug 40 handelt es sich beispielsweise um ein Schneidwerkzeug, mit dem die Planflächen 28 und 29 des Passlagers 12 spanend bearbeitet werden. Beim Bearbeitungswerkzeug 6 handelt es sich beispielsweise um einen Rollenkörper, mit zwei Rollen 41 und 42, mit deren Hilfe die ringförmigen Planflächen 28 und 29 nach der spanenden Bearbeitung durch das Werkzeug 40 festgewalzt werden.

Weitere Bearbeitungsstationen (nicht gezeigt) sind auf dem Werkzeugrevolver 7 vorgesehen und dienen beispielsweise mit entsprechenden Werkzeugen (nicht gezeigt) zur spanabhebenden Bearbeitung des Wellenzapfens 8 oder des Flansches 15. Ebenso können die Bearbeitungsstationen des Werkzeugrevolvers 7 mit Messwerkzeugen (nicht gezeigt) bestückt sein, mit deren Hilfe die Ergebnisse der vorangehenden spanenden oder verfestigenden Bearbeitung überprüft werden.

### Bezugszeichenliste

- 1: Servomotor
- 2: Spannfutter
- 3: Lünette
- 4: Reitstock
- 5: Kreuzschlitten
- 6: Bearbeitungswerkzeug
- 7: Werkzeugrevolver
- 8: Wellenzapfen
- 9: Hublager
- 10: Hauptlager
- 11: Hublager
- 12: Hauptlager
- 13: Hublager
- 14: Hauptlager
- 15: Flansch
- 16: Werkzeugmaschine
- 17: Maschinenbett
- 18: axiale Längsrichtung
- 19: Kurbelwelle
- 20: Reitstockspitze
- 21: geringer Weg
- 22: geringer Weg
- 23: Kurbelwange
- 24: Kurbelwange
- 25: Lagersitz
- 26: Einstich
- 27: Einstich
- 28: ringförmige Planfläche
- 29: ringförmige Planfläche
- 30: Ölbund
- 31: Ölbund
- 32: axialer Abstand
- 33: Längsbalken
- 34: Längsführung
- 35: Abstand
- 36: Führungsrichtung
- 37: Querführung
- 38: radiale Richtung
- 39: Bearbeitungsstation
- 40: Werkzeug
- 41: Rolle
- 42: Rolle

## Patentansprüche

1. Werkzeugmaschine zum Bearbeiten des Passlagers und ggf. weiterer Teile von Kurbelwellen,
**gekennzeichnet durch**
- ein rahmenförmiges Maschinenbett (17) von angenähert rechteckigem Querschnitt mit einer an einem Ende des Maschinenbetts (17) angeordneten antreibbaren Hauptspindel mit einem Spannfutter (2) für eine Kurbelwelle (19),
- einen gegenüber der Hauptspindel und in der Flucht (18) mit ihr liegenden sowie um geringe Wege (22) in der axialen Längsrichtung (18) verfahrbaren Reitstock (4),
- eine um geringe Wege (21) in der axialen Längsrichtung (18) verfahrbare sowie um einen geringen Weg senkrecht zur Längsrichtung (18) zustellbare Lünette (3) annähernd in der Längsmitte der Kurbelwelle (19),
- einen Längsbalken (33), der sich parallel und in einem Abstand (32) zur Hauptspindel über wesentliche Längenabschnitte des Maschinenbetts (17) erstreckt und Längsführungen (34) aufweist
- einen Kreuzschlitten (5), der in den Längsführungen (34) des Längsbalkens (33) geführt ist und Querführungen (37) hat,
- einen Werkzeugrevolver (7), der auf dem Kreuzschlitten (5) in der radialen Richtung (38) bewegbar angeordnet ist und zur Aufnahme von Oberflächen (28, 29) des Passlagers (12)
- zerspanenden (40),
- verfestigenden (6) und
- vermessenden Werkzeugen, sowie ggf.
- weiteren Werkzeugen für das Bearbeiten von weiteren Teilen (8, 15) der Kurbelwelle (19) dient.

2. Werkzeugmaschine nach Anspruch 1,
**dadurch gekennzeichnet, dass** der Werkzeugrevolver (7) wenigstens einen Zusatzantrieb für eines der Werkzeuge (6, 40) aufweist.

## Claims

1. Machine tool for machining the thrust bearing and optionally further components of crankshafts, **characterised by**
- a frame-like machine base (17) of approximately rectangular cross-section with a drivable main spindle arranged at one end of the machine base (17) and comprising a chuck (2) for a crankshaft (19),
- a tailstock (4), that is lying opposite the main spindle and in alignment (18) therewith and that can be moved by small distances (22) in the axial longitudinal direction (18),
- a steady rest (3), approximately in the longitudinal centre of the crankshaft (19), that can be moved by small distances (21) in the axial longitudinal direction (18) and can be advanced by a small distance perpendicular to the longitudinal direction (18),
- a longitudinal beam (33) which extends parallel to and at a spacing (32) from the main spindle over fundamental longitudinal portions of the machine base (17) and comprises longitudinal guides (34),
- a compound slide rest (5) which is guided in the longitudinal guides (34) of the longitudinal beam (33) and has transverse guides (37),
- a tool revolver (7) which is movably arranged in the radial direction (38) on the compound slide rest (5) and is used to receive
- tools that
- cut (40)
- strengthen (6) and
- measure
surfaces (28, 29) of the thrust bearing (12) and optionally
- further tools for machining further components (8, 15) of the crankshaft (19).

2. Machine tool according to Claim 1, **characterised in that** the tool revolver (7) comprises at least one additional drive for one of the tools (6, 40).

## Revendications

1. Machine-outil pour le travail du palier de centrage et, le cas échéant, d'autres pièces de vilebrequins,
**caractérisée par**
- un socle de machine (17) en forme de cadre de section transversale approximativement rectangulaire, avec une broche principale, actionnable, disposée à une extrémité du socle (17) de la machine, avec un mandrin de serrage (2) pour un vilebrequin (19),
- une poupée mobile (4), disposé vis-à-vis de la broche principale et en alignement (18) avec elle, et pouvant être déplacée, sur de faibles parcours (22), dans la direction longitudinale axiale (18),
- une lunette (3) pouvant être conduite, sur de faibles parcours (21), dans la direction longitudinale axiale (18), ainsi qu'ajustée, sur un faible parcours, perpendiculairement à la direction longitudinale (18), approximativement au milieu de la longueur du vilebrequin (19),
- un longeron ((33) qui s'étend parallèlement et à un intervalle (32) de le la broche principale sur des sections longitudinales considérables du socle (17) de la machine et présente des guides longitudinaux (34),
- un chariot à double coulisse (5), qui est conduit dans les guides longitudinaux (34) du longeron (33) et possède des guides transversaux,
- une tourelle revolver (7) qui est disposée, mobile dans la direction radiale (38), sur le chariot à double coulisse (5) et sert à recevoir des outils
d'usinage par enlèvement de copeaux (40),
de consolidation (6), et
de mesure des surfaces (28, 29) du palier de centrage (12), ainsi que, le cas échéant,
d'autres outils pour travailler d'autres pièces (8, 15) du vilebrequin (19).

2. Machine-outil selon la revendication 1,
**caractérisée en ce que**
la tourelle revolver (7) présente au moins une commande supplémentaire pour l'un des outils (6, 40).
